# DEMANDE DE BREVET EUROPEEN

(11) **EP 4 215 059 A1**
(43) Date de publication de la demande: **26.07.2023**
(21) Numéro de dépôt: 23150810.2
(22) Date de dépôt: 09.01.2023
(51) Int. Cl.: A23L 23/00, A23L 33/185, A23L 33/19, A23L 33/00

(54) **SOLUTION CULINAIRE CONTRE LA DÉNUTRITION**

(30) Priorité: 24.01.2022 FR 2200580
(71) Demandeur: Pappa, 69300 Caluire-et-Cuire (FR)
(72) Inventeur: THIERYWEBER, Zacharie, 69006 LYON (FR); LUCET-JACQUET, Carla, 21000 DIJON (FR)
(74) Mandataire: Demulsant, Xavier

(57) **Abrégé**

Solution culinaire hyperprotéique et hypercalorique concentrée, caractérisée en ce qu'elle se présente sous la forme d'une sauce comprenant des protéines laitières et des protéines de gluten, la concentration en protéines étant supérieure à 15% en masse, soit au moins 9.75g de protéines et au moins 110 kcal pour 65g de sauce.

## Description

L'invention a trait au domaine technique des solutions culinaires contre la dénutrition, en particulier des sujets âgés.

Une solution culinaire est un produit ou une technique qui simplifie et accélère la création de recettes.

Par « solution culinaire », on désigne ici des préparations qui permettent de personnaliser des plats, par exemple de viande, de poisson ou de légumes, en fonction des besoins, ici des besoins de personnes dénutries, notamment de personnes âgées dénutries.

Par « solution culinaire contre la dénutrition », on désigne ici des préparations alimentaires permettant d'adapter le profil nutritionnel des plats, pour les personnes dénutries, en particulier les personnes âgées dénutries.

Le vieillissement de la population est observé à travers le monde. Selon l'INSEE, les personnes âgées d'au moins 65 ans représentaient 19% de la population en 2018, et cette proportion sera d'une personne sur quatre en 2040. Selon Eurostat, au sein de l'Union Européenne, la part de la population âgée de plus de 65 ans était de 20% en 2019 et devrait dépasser 25% en 2040. Selon les Nations Unies, la population âgée de 65 et plus était de 9% en 2019 dans le monde, et devrait atteindre 16% en 2050. Cette augmentation de la part des personnes âgées de plus de 65 ans dans la population mondiale s'accompagnera d'une augmentation en nombre, la population mondiale devant atteindre, selon les prévisions, environ 10 milliards en 2050.

La part des personnes âgées de plus de 65 ans devrait ainsi continuer d'augmenter dans les prochaines décennies, tant en nombre qu'en pourcentage, et il en va de même des personnes très âgées.

Le nombre de centenaires a augmenté de manière continue en France depuis 1900, passant d'une centaine de personnes à plus de 26000 personnes en 2021. Selon l'INED, la France pourrait compter environ 73000 centenaires en 2040. Selon les Nations Unies, le nombre de personnes de plus de 80 ans vivant dans le monde était de 125 millions en 2015 et devrait atteindre 430 millions en 2050.

Avec le vieillissement de la population, la dénutrition ainsi que la malnutrition, la sarcopénie, l'anorexie liée à l'âge sont des enjeux de santé publique.

La prévalence de la dénutrition serait de 4% à 10% chez les personnes âgées à domicile, en Europe. Selon la HAS, entre 15% et 40% des personnes âgées placées en institution souffrent de dénutrition. Chez les sujets âgés hospitalisés, la dénutrition concernerait jusqu'à 60% des personnes, entrainant des durées d'hospitalisation plus élevées, et des risques accrus de complications.

Il est estimé que 33 millions de personnes seraient touchées par la dénutrition en Europe, dont 2 millions en France. En France, l'objectif gouvernemental, dans le cadre du PNNS 4, est de réduire de 30% de nombre de personnes âgées de plus de 80 ans et dénutries, à l'horizon 2023.

Il est estimé que 38% des personnes atteintes de cancer sont en dénutrition sévère, soit environ 480 000 personnes en France, dont 10% décèdent des suites directes de la dénutrition. Il est estimé qu'un enfant hospitalisé sur dix est dénutri, soit environ 105 000 enfants en France. La dénutrition favorise l'apparition de l'ostéoporose, augmente les risques de chute et de fracture, peut être responsable d'une diminution ou d'une perte d'autonomie. La dénutrition ralentit la cicatrisation, altère le système immunitaire, diminue l'espérance de vie du patient, en ville ou à l'hôpital.

Le terme « dénutrition » est défini de différentes manières, suivant les auteurs.

Le terme dénutrition est souvent présenté comme synonyme de malnutrition protéino-énergétique, c'est-à-dire un état de déséquilibre nutritionnel de l'organisme, avec un bilan énergétique et/ou protéique négatif.

Par dénutrition on désigne un trouble caractérisé par la prédominance des phénomènes de désassimilation sur les phénomènes d'assimilation. Par dénutrition on désigne aussi un état dans lequel se trouve une personne qui a subi pendant un certain temps une insuffisance d'apport des matériaux nutritifs nécessaires à sa vie. Par dénutrition on désigne également un état pathologique résultant d'apports nutritionnels insuffisants en regard des dépenses énergétiques de l'organisme. Par dénutrition, on désigne également une situation physiopathologique, résultant d'un déficit d'apport énergétique et/ou protéique. Par dénutrition, on désigne en particulier un état pathologique dans lequel les besoins en énergie ou en protéines de l'organisme ne sont pas couverts.

La dénutrition peut intervenir en cas de malnutrition, à domicile ou lors d'une hospitalisation.

La dénutrition peut survenir à la suite d'un isolement social ou d'une perte d'autonomie.

La dénutrition peut être secondaire à une pathologie chronique ou aigue, augmentant la dépense énergétique, ou augmentant les pertes.

Par sarcopénie, on désigne ici une perte de masse musculaire associée à un déficit de performance et/ou de force musculaire. La sarcopénie rend la motricité plus difficile, et augmente les risques de chute. L'anabolisme protéique est réduit lors du vieillissement. L'effet stimulateur du repas sur la synthèse protéique musculaire diminue avec l'âge, et les pertes protéiques liées à la dépense énergétique de base ne sont plus compensées de manière satisfaisante.

Chez les sujets sarcopéniques, en cas de survenue d'un épisode inflammatoire, le capital de protéines musculaires, déjà amoindri, va être consommé. L'inflammation chronique ou aigue, en particulier en cas de cancer, de rhumatisme, d'ulcères, ou les désordres métaboliques, en particulier le diabète et l'hyperthyroïdie provoquent un hyper catabolisme chez les personnes âgées. Les protéines provenant de l'alimentation ne couvrent plus les besoins.

La sarcopénie est parfois secondaire à un défaut d'apport protéique ainsi qu'à un défaut d'activité musculaire.

Par anorexie liée à l'âge, on désigne ici une satiété précoce, les personnes âgées ayant une sensation d'appétit à jeun inférieure à celle des sujets jeunes, et une sensation de satiété plus importante après un repas standard.

Plusieurs facteurs liés au vieillissement pourraient intervenir dans la survenue de cette anorexie, comme l'altération de la denture, l'altération des capacités sensorielles, notamment l'augmentation du seuil de perception du goût et de l'odorat. La difficulté de faire ses courses ou de préparer ses repas peut également entraîner une limitation des apports nutritionnels. A l'hôpital, la nourriture est parfois jugée mauvaise d'un point de vue gustatif par les patients, cause supplémentaire d'anorexie liée à l'âge.

Le vieillissement s'accompagne souvent de troubles buccaux tels que la perte de dents, la diminution de la sécrétion salivaire ou la diminution de la force musculaire. Ces altérations de la sphère orale peuvent alors avoir un impact sur la formation de bol alimentaire et sa déglutition. L'hyposalivation pourrait être un facteur de risque possible de perte d'appétit et d'apport alimentaire déséquilibré chez les personnes âgées. La perte d'appétit peut découler d'une perte d'odorat ou de goût avec l'âge, ou de traitement médicaux, ou de problèmes psychologiques, cette perte d'appétit conduisant à un apport réduit en protéines, une perte de poids.

Le diagnostic de la dénutrition repose sur l'association d'au moins un critère phénotypique et au moins un critère étiologique. Selon la HAS, chez les sujets âgés de plus de 70 ans, les critères phénotypiques sont un IMC de moins de 22, ou une sarcopénie confirmée, ou encore une perte de poids importante, de plus de 5% en un mois ou de plus de 10% en six mois. Les critères étiologiques sont la présence d'une situation pathologique aigüe, chronique ou maligne, ou l'absorption réduite (malabsorption/maldigestion), ou la réduction de la prise alimentaire. La sévérité de la dénutrition est établie selon des seuils d'IMC ou de pourcentages de perte de poids ou d'albuminémie.

La prise en charge de la dénutrition est habituellement graduée, selon trois niveaux.

Un premier niveau comporte des conseils diététiques, l'aide à la prise alimentaire, l'alimentation enrichie en protéines, et la prescription de compléments nutritionnels oraux (CNO, Oral Nutritional Supplements ONS). Les CNO sont des aliments diététiques destinés à des fins médicales spéciales (ADDFMS), sur prescription médicale. Leurs indications, compositions de prescription, de délivrance et de remboursement sont encadrées en France par un arrêté du 7 mai 2019. Un deuxième niveau consiste à administrer un mélange nutritif dans le tube digestif à l'aide d'une sonde (nutrition entérale). Un troisième niveau consiste à administrer un mélange nutritif par une autre voie que digestive, en particulier veineuse (nutrition parentérale). La nutrition entérale est une nutrition artificielle qui administre des nutriments sous forme liquide dans le tube digestif par l'intermédiaire d'une sonde passant par le nez, ou introduite directement dans l'estomac ou dans l'intestin. La nutrition entérale est privilégiée dans la mesure du possible, par rapport à la nutrition parentérale, car elle est plus proche du processus physiologique.

L'utilisation d'aliments enrichis en protéines peut avoir pour inconvénient que les personnes âgées ne finissent pas leur assiette, avec des risques de déficit en acides aminés essentiels.

L'ajout d'une poudre de protéines dans un plat peut conduire à des effets inverses de ceux recherchés. Par exemple, un mauvais dosage de la quantité de poudre de protéines ajoutée peut conduire à un plat présentant un mauvais goût et/ou une texture granuleuse, qui peuvent rebuter lors de la présentation du plat. Suite à ce mauvais dosage, un CNO prescrit par le médecin n'est pas délivré.

Chez les personnes âgées dénutries, les conseils diététiques peuvent avoir pour implication une augmentation de la quantité de nourriture à ingérer, alors même que les personnes ont un appétit réduit. Selon Virginie Van Wymelbeke et al., seulement 7% des personnes âgées vivant en institution satisfont à leurs besoins caloriques et protéiques, ces mangeurs étant qualifiés de mangeurs normaux, et 51% présentent un apport calorique et/ou protéique inférieur à 100% des besoins et supérieur au deux tiers des apports recommandés, ces mangeurs étant dénommés « petits mangeurs », les 42% restant étant dénommés « tout petits mangeurs » et présentant un apport calorique et/ou protidique inférieur aux deux tiers des apports recommandés. (Van Wymelbeke V, Sulmont-Rossé C. Vieillissement, adaptation alimentaire au grand âge et petit appétit : le petit mangeur âgé. In: Hugol-Gential C, editors. Bien et Bon à Manger : Penser notre Alimentation du Quotidien à l'institution Dijon, France: Editions Universitaires de Dij*on*). Selon Claire Sulmont-Rossé, ces résultats illustrent le besoin de développer des aliments enrichis permettant aux petits mangeurs, majoritaires dans la population âgée, de couvrir leurs besoins nutritionnels, en s'appuyant sur les catégories d'aliments qui restent bien consommées par ces personnes *(Colloque Renessens, Paris 2018).*

Pour tenter de pallier l'augmentation de la quantité de nourriture à ingérer, alors même que les personnes ont un appétit réduit, les conseils diététiques sont souvent accompagnés d'une prescription d'aliments enrichis en protéines, ou de CNO.

Les CNO sont commercialisés sous des formes très variées (le plus souvent boissons lactées, crèmes desserts, yaourt brassé, glaces, potage, jus de fruit, poudres de protéines, et moins souvent sous forme de biscuits, gâteaux, pains briochés, céréales, compotes, plats mixés).

Les CNO sont classés selon l'arrêté de 2019 en quatre catégories.

Une première catégorie est celle des mélanges polymériques normo-protidiques et hyper-énergétiques. De tels CNO sont par exemple commercialisés sous les marques Fortimel^{®}Energy, Fortimel ^{®}Yog, Clinutren^{®}soup, Nutra'cake, Nutra'pote. Dans cette première catégorie de CNO, les concentrations en protéines sont comprises entre 1.5 et 7 g pour 100g.

Une deuxième catégorie de CNO est celle des mélanges polymériques hyper-protidiques. De tels CNO sont par exemples commercialisés sous les marques Clinutre^{®}Dessert, Floridine, Fresubin^{®}Energy ^{®}, Delical nutra'mix. Dans cette deuxième catégorie de CNO, les concentrations en protéines sont supérieures à 7 g pour 100 g, typiquement comprises entre 9 et 10,5 g pour 100 g.

Une troisième catégorie de CNO est celle des mélanges polymériques hyper-protidiques et hyper-énergétiques, présentant une concentration en protéines supérieure à 10 g pour 100 g.

Une quatrième catégorie de CNO est celle des mélanges polymériques hyper-protidiques et hyper-énergétiques concentrés, présentant une concentration en protéines supérieure ou égale à 14 g pour 100 mL et une valeur énergétique supérieure ou égale à 2.25 kcal par mL. De tels CNO sont par exemples commercialisés sous la forme de boissons lactées, sous les marques Clinutren^{®} concentré, Fortimel^{®} Protéines sensation, Renutryl^{®} concentré. Ces CNO sont sans gluten et les protéines contenues dans ces CNO proviennent du lait (caséine).

On connait également des CNO ne contenant qu'un seul macronutriment (protéine, glucide ou lipide, par exemple commercialisés sous les marques Delical, Protifar, Liprocil).

Les CNO commercialisés peuvent être avec ou sans lactose. La plupart des CNO sont dépourvus de gluten.

Les CNO présentent de nombreux inconvénients.

Les CNO ne sont prescrits que de manière transitoire, et selon les recommandations la première prescription en France ne doit pas dépasser un mois. La prescription des CNO nécessite une connaissance des produits par les médecins généralistes. Le médecin généraliste pourra privilégier les qualités nutritionnelles du CNO lors de la prescription, alors que la personne âgée va privilégier les qualités organoleptiques, liées au goût et à la texture, dans le but de se faire plaisir.

Les CNO ont des gouts et textures ne correspondant pas nécessairement aux aliments habituels. Leur prise entre les repas est préconisée par les professionnels de santé qui les prescrivent en complément de l'alimentation et de façon transitoire, avec les risques d'oubli, ou de lassitude qui en résultent. Les CNO qui doivent être délivrés en collation ont tendance à remplacer les repas, avec un effet coupe-faim.

La prise des CNO peut devenir lassante pour les personnes âgées, qui peuvent avoir le sentiment de prendre un médicament.

Les CNO doivent être conservés au réfrigérateur après ouverture, ou doivent être consommés rapidement s'ils restent à température ambiante après ouverture. Leur prise est habituellement fractionnée, avec les risques d'oubli qui en découlent. Une prise mal fractionnée peut engendrer une sensation d'écoeurement.

Il n'est pas rare qu'un CNO contienne, en plus d'ingrédients naturels tels que lait, sucre, huile végétale, cacao, plus de trente autres ingrédients, dont des vitamines, et notamment arôme, émulsifiant, correcteur d'acidité, stabilisant. De telles compositions peuvent donner le sentiment que les CNO ne sont pas des produits naturels.

Les CNO sont coûteux, et leur effet coupe-faim défavorise la prise alimentaire classique au moment des repas.

Les CNO peuvent être assez volumineux à transporter et à stocker.

La nutrition entérale n'est en principe envisagée que lorsque les CNO n'ont pas eu l'effet escompté. La nutrition entérale est assez coûteuse, nécessite une prescription hospitalière, et affecte l'autonomie des personnes. La nutrition parentérale n'est en principe envisagée que lorsque la nutrition entérale n'est pas possible ou n'a pas donné les résultats escomptés. La nutrition parentérale présente des risques élevés, est très couteuse, nécessite un suivi spécialisé et une prescription hospitalière.

Le document FR 3100429 décrit une aide culinaire hyperprotéique et hypercalorique, destinée à être incorporée dans des préparations alimentaires salées et/ou sucrées, pour personnes âgées souffrant de dénutrition et/ou de sarcopénie. L'aide culinaire présentée dans ce document antérieur est de goût neutre, d'odeur et de couleur neutres, de sorte que sa présence n'est pas perçue une fois incorporée dans la préparation alimentaire. L'aide culinaire n'est pas destinée à être consommée directement en tant que telle, mais toujours au sein d'une préparation alimentaire. L'aide culinaire se présente sous la forme d'une pâte, type pâte à gâteau crue, et contient moins de 2.5% d'eau. Les protéines contenues dans l'aide culinaire sont des protéines animales (protéine d'oeuf, de collagène, de préférence protéine de lactosérum), et des protéines végétales (protéine d'avoine, de pois, de lentille, et de préférence de soja).

La présente invention vise à éviter ou limiter le recours aux CNO et à réduire ou retarder le recours à la nutrition entérale ou parentérale, en proposant des solutions culinaires permettant de prévenir la dénutrition ou de lutter contre la dénutrition, en particulier chez les personnes âgées.

L'invention vise à fournir des solutions culinaires, adaptées aux contraintes des maisons de retraite, maisons de retraite médicalisées, EPHAD (Etablissement d'hébergement pour personnes âgées dépendantes), ou aux contraintes des milieux hospitaliers, les solutions culinaires fournies par l'invention redonnant aux personnes, notamment les personnes âgées, de l'appétit, c'est-à-dire le plaisir de manger.

Un autre objet de l'invention est de fournir de telles solutions culinaires, adaptées aux contraintes des repas livrés à domicile, facilitant ainsi le maintien des personnes âgées à domicile.

Un autre objet de l'invention est de fournir de telles solutions culinaires, permettant l'apport de protéines en concentrations élevées, typiquement supérieures à 10 g pour 100 g, de préférence supérieures à 15 g pour 100 g, voire supérieures à 20 g pour 100 g.

Un autre objet de l'invention est de fournir de telles solutions culinaires à hautes qualités organoleptiques.

Un autre objet de l'invention est de fournir des solutions culinaires permettant un apport en protéines adapté à chaque personne, notamment personne âgée, l'utilisation des solutions culinaires ne nécessitant pas de formation spécifique pour le personnel préparant les repas.

Un autre objet de l'invention est de fournir des solutions culinaires permettant un apport en protéines adapté à des personnes, notamment des personnes âgées, présentant des états de dénutrition différents, avec une garantie de délivrance du bonus protéique et calorique, les solutions culinaires étant prêtes à l'emploi.

Un autre objet de l'invention est de fournir des solutions culinaires permettant un apport en protéines adapté aux personnes, de manière quantitative et qualitative, avec un profil en acides aminés essentiels équilibré et complet, un indice chimique supérieur à 100 et une bonne digestibilité (score chimique corrigé de digestibilité PDCAAS supérieur à 100).

Un autre objet de l'invention est de fournir des solutions culinaires source de protéines, permettant d'enrichir une grande variété de composante d'un plateau repas standard : hors d'oeuvre, entrées, soupe, composantes protidiques (poissons, viandes), accompagnements (légumes, féculents), les solutions culinaires pouvant être utilisées en complément d'un plat de viande, un plat de poisson, ou en accompagnement d'un plat, par exemple de riz ou de pâtes.

Un autre objet de l'invention est de fournir de telles solutions culinaires dont l'emploi ne nécessite pas de prescription médicale.

A ces fins, il est proposé une solution culinaire hyperprotéique, se présentant sous la forme d'une sauce comprenant des protéines laitières et des protéines de gluten, la concentration en protéines étant supérieure à 15% en masse, soit au moins 9.75g de protéines pour 65g de sauce. La solution culinaire est avantageusement hypercalorique (au moins 110 kcal), et concentrée (dans une portion de 65g de sauce). La solution culinaire est ainsi adaptée aux personnes ayant un appétit réduit, notamment les personnes âgées (petits mangeurs).

L'ajout de sauce enrichie en protéines dans un plat principal va augmenter l'apport consommé en protéines et en calories, par rapport au même plat principal sans sauce enrichie, sans augmentation des quantités à ingérer de viande, de poisson ou de légumes.

L'ajout de la solution culinaire, en nappage ou en aide culinaire, permet une augmentation de la prise de protéines, sans nécessiter de mastication, sans augmentation sensible du volume de nourriture à avaler. L'aide culinaire est ainsi adaptée aux personnes âgées dénutries. La présence de sauce facilite la mastication et l'avalement, notamment en cas de xérostomie, fréquente chez les personnes âgées.

La présence de sauce augmente l'attractivité du plat, en créant un contraste visuel.

Les personnes âgées sont habituées à saucer leurs assiettes, et l'ajout d'une sauce hyper-protéinée va ainsi permettre de lutter contre la dénutrition, la solution culinaire contenant des taux très élevés de protéines, dans un petit volume de sauce.

Dans certaines mises en oeuvre, les protéines de gluten sont des protéines de gluten de blé.

Par exemple, la sauce contient du gluten de blé. Par gluten de blé on désigne ici la fraction protéique insoluble du grain de blé tendre et dur. Par exemple, le gluten de blé est une poudre obtenue à partir de farine de blé tendre, formant une pâte, qui est ensuite rincée à l'eau courante pour éliminer l'amidon par lixiviation, la poudre étant ensuite séchée. Les protéines du gluten de blé sont classées en deux catégories : les gliadines qui sont des protéines monomériques, et les gluténines qui sont des protéines polymériques. Les propriétés mécaniques du gluten (viscosité, élasticité) dépendent essentiellement des gluténines, et en particulier de leur degré de polymérisation. Les gliadines favorisent l'extensibilité.

Avantageusement, la solution culinaire comprend entre 4% et 10% en poids de protéines de gluten.

Avantageusement, la solution culinaire comprend un concentrat de protéines de lait.

Dans diverses mises en oeuvre, la solution culinaire comprend un ingrédient choisi parmi le groupe comprenant le beurre, la crème, le lait, le fromage, l'huile, l'œuf, le pois chiche.

Dans diverses mises en oeuvre, la solution culinaire comprend un ingrédient choisi parmi le groupe comprenant l'oignon, l'ail, l'échalote, le sel, le poivre, le vin, les champignons.

L'ajout d'agents de sapidité, comme le sel, le poivre ou l'oignon, augmente la prise de nourriture.

La solution culinaire se présente par exemple sous la forme d'une sauce enrichie avec un mélange de protéines végétales et animales, de préférence des protéines de blé et des protéines laitières, la solution culinaire comprenant des champignons et oignons rissolés, déglacés au vin blanc, avec une note de cèpe et une texture crémeuse.

Les ingrédients de la solution culinaire sont directement issus de produits naturels, facilitant leur acceptation.

Dans certaines réalisations, la solution culinaire est enrichie en vitamines et/ou en micronutriments.

Il est proposé, selon un deuxième aspect, un procédé de fabrication d'une solution culinaire telle que présentée ci-dessus, le procédé comprenant une étape de mélange et cuisson des ingrédients de la sauce, suivie d'une étape de cuisson et broyage, à l'issue de laquelle le mélange obtenu subit une étape de refroidissement, le mélange de protéines étant ajouté après cette étape de refroidissement.

Dans certaines mises en oeuvre, l'étape de refroidissement amène le mélange à une température comprise entre 40°C et 60°C. Avantageusement, le procédé comprend, après l'étape d'ajout du mélange de protéines, une étape de chauffe du mélange obtenu, à une température comprise entre 60°C et 80°C.

Il est proposé, selon un troisième aspect, l'utilisation d'une solution culinaire telle que présentée ci-dessus, comme sauce accompagnant un plat préparé, ou comme aide culinaire intégré à un plat préparé.

Il est proposé, selon un quatrième aspect, l'utilisation d'une solution culinaire telle que présentée ci-dessus, dans l'alimentation de personnes dénutries, de préférence de personnes âgées dénutries. Avantageusement, cette utilisation ne nécessite pas de prescription médicale.

D'autres objets et avantages de l'invention apparaîtront à la lumière de la description de modes de réalisation, faite ci-après.

Il est proposé une solution culinaire hyperprotéique et hypercalorique concentrée, se présentant sous la forme d'une sauce enrichie en protéines et en calories.

Par sauce, on désigne ici une préparation liquide ou semi-liquide, qui accompagne ou accommode certains mets, et contenant des corps gras, du sel, des épices, et divers ingrédients.

Une variété de produits naturels est envisageable pour l'enrichissement en protéines de sauces.

Le tableau ci-dessous présente les teneurs en protéines de produits naturels pouvant a priori être intégrés à des sauces.

| Dénomination | Teneur en protéines pour 100 g |
|---|---|
| Purées de légumineuses cuites | |
| Purée de soja | 38 g |
| Purée de lupin | 15 g |
| Purée de lentilles | 9 g |
| Purée de haricots (rouges, noirs, pinto) | 9 g |
| Purée de pois chiche | 8 g |
| Purée de pois cassés | 8 g |
| Purée de patate douce | 1,7 g |
| Purée de butternut | 1,2 g |

| Farines | |
|---|---|
| Farine de pépins de courge | 59 g |
| Farine de cacahuète | 45 g |
| Farine de lupin | 40 g |
| Farine de chanvre | 40 g |
| Farine de soja déshuilée | 39 g |
| Farine de lentille | 24 g |
| Farine de pois chiche | 22 g |
| Farine d'amarante | 15,5 g |
| Son de blé | 15,5 g |
| Farine de pois jaunes | 15 g |
| Farine de quinoa | 13 g |
| Son d'avoine | 13 g |
| Farine d'épeautre | 12,5 g |
| Farine de blé T45 | 10 g |

| Autres | |
|---|---|
| Chlorelle déshydratée crue (algue) | 61 g |
| Spiruline déshydratée crue (algue) | 57 g |
| Farine d'insectes comestibles (grillons) | 52 g |
| Skyr (yaourt) | 10g |

La demanderesse s'est orientée vers l'enrichissement en protéines d'une sauce par utilisation de farines, par exemple farine de blé, farine de pois chiche, farine d'épeautre, farine de lupin.

Les teneurs en protéines de ces différentes farines sont variables, par exemple de l'ordre de 8.4% pour une farine de blé T45, de 21.7% pour une farine de pois chiche, de 14.2% pour une farine d'épeautre complète, et de 40% pour une farine de lupin.

Il en résulte que les quantités de farine qsp (quantité suffisante pour) à employer pour obtenir 10g de protéines sont de 119g pour une farine de blé T45, de 46.1g pour une farine de pois chiche, de 70.4g pour une farine d'épeautre complète, et de seulement 25g pour une farine de lupin. Les volumes de farine qsp à utiliser pour obtenir 10g de protéines sont de 152mL pour une farine de blé T45, et seulement de 50mL pour une farine de lupin.

Il apparait ainsi avantageux d'employer une farine de lupin, ou une farine de pois chiche, plutôt qu'une farine de blé pour enrichir une sauce en protéines. La quantité de farine à utiliser (en volume ou en masse) est en effet nettement plus faible.

De plus, la farine de pois chiche est connue pour sa saveur douce et délicatement sucrée, et est souvent employée dans les préparations sans gluten. La farine de lupin s'intègre également très bien aux recettes sans gluten. Or, il existe une demande croissante pour des alimentations sans gluten. Le gluten est évité dans la fabrication d'un grand nombre de CNO ou de produits alimentaires, face à la fréquence accrue des pathologies liées au gluten de nature auto-immunes ou allergiques : intolérances au gluten, maladie céliaque, ataxie au gluten, dermatite herpétiforme, et intolérance non coeliaque liée au gluten. Le marché des produits sans gluten connait une croissance très forte ces dernières années.

Après de très nombreux essais, la demanderesse a découvert que la fabrication de roux avec certaines farines présentait de nombreux inconvénients, rendant sont industrialisation délicate.

Par « roux », on désigne ici un mélange de farine et de beurre en proportions sensiblement égales, cuits plus ou moins longtemps selon la coloration à obtenir.

La demanderesse a également observé que les roux obtenus avec certaines farines présentent des textures ou des saveurs qui ne sont pas adaptées aux personnes âgées, en particulier aux personnes âgées dénutries.

Des essais ont été effectués dans les conditions suivantes : mélange de 10g de farine, 10g de beurre, 10g de lait, et ajustement en farine et en lait par la suite, jusqu'à obtention d'une pâte souple et lisse.

La texture des roux obtenus n'est pas satisfaisante lorsque la farine de pois chiche, la farine d'épeautre complète ou la farine de lupin sont employées.

La réalisation d'un roux à la farine de pois chiche (15 g de beurre + 22 g de farine de pois chiche + 81 g de liquide soit 21 g de lait et 60 g d'eau), conduit à un roux de texture granuleuse en bouche, poudreuse et farineuse.

La réalisation d'un roux à la farine d'épeautre complète T150 (15 g de beurre + 22 g de farine d'épeautre complète T150 + 85 g d'eau), conduit à un roux de texture non homogène, pas lisse, des pellicules étant ressenties en bouche.

La réalisation d'un roux à la farine de lupin (15 g de beurre + 22 g de farine de lupin + 40 g d'eau), conduit à un roux pâteux en bouche. Le goût est amer, terreux, astringent.

En termes de goût, le roux obtenu avec de la farine d'épeautre complète est apparu acceptable, avec un taux de protéines dans le roux de 14.2%. Les taux de protéines dans le roux sont plus élevés dans le roux obtenu à partir de farine de pois chiche (21.7%), ou de farine de lupin (40%), mais avec une forte altération du gout.

La demanderesse a effectué des essais avec une grande variété d'autres farines : amarante, soja, pois, lentilles vertes, chanvre, quinoa, avoine, froment.

Les teneurs en protéines des différentes farines sont présentées dans le tableau suivant.

| | Teneur en protéines pour 100g (%) | Quantité de farine qsp 10 g de protéines (g) | Volume de farine qsp 10g de protéines (mL) |
|---|---|---|---|
| Farine de blé T45 | 8.4 | 119.05 | 152.6 |
| Farine de pois chiche | 21.7 | 46.1 | 74.4 |
| Farine d'épeautre complète T150 | 14.2 | 70.4 | 113.5 |
| Farine de lupin | 40.0 | 25 | 50 |
| Farine de soja déshuilée | 40.0 | 25 | 49 |
| Farine d'amarante | 15.5 | 64.5 | 81.6 |
| Farine de quinoa | 11.7 | 85.5 | 131.5 |
| Farine de lentille verte | 25.8 | 38.8 | 53.2 |
| Farine de froment T70 | 13 | 76.9 | 109.9 |
| Farine de chanvre déshuilé | 33 | 30.3 | 38.4 |
| Farine d'épeautre T70 | 13 | 76.9 | 108.3 |
| Son d'avoine | 13 | 76.9 | 150.8 |

Les quantités de farine qsp supérieures à 65g ne permettent pas d'atteindre un objectif de 10g de protéines dans 65g de sauce. Les farines de lupin, de soja déshuilé et de chanvre pourraient convenir pour enrichir une sauce, car elles permettent de laisser de la place pour apporter 35g d'autres ingrédients en masse.

Pour certaines farines, la texture du roux obtenu n'est pas satisfaisante. Lorsque la texture est acceptable, le goût est trop prononcé pour une utilisation en sauce pour des viandes, des poissons ou des légumes, ou pour une intégration comme aide culinaire.

L'utilisation de la farine d'amarante conduit à un roux présentant une odeur verte, de poireau, assez prononcée, et une saveur de poireau vert sucré.

L'utilisation de la farine de froment ou de lentilles vertes conduit à un roux présentant une texture farineuse.

L'utilisation de la farine de son d'avoine conduit à un roux de texture non homogène, granuleuse.

L'utilisation de la farine de soja déshuilé conduit à un roux présentant une saveur de beurre de cacahuète acidulé vert.

L'utilisation d'une farine de quinoa conduit à un roux non homogène, présentant une forte odeur de soja mouillé avec des notes vert âpres. L'utilisation d'une farine de chanvre conduit à un roux de texture non homogène et de saveur très désagréable, de type racine toasté.

La demanderesse a observé qu'aucune des farines disponibles dans le commerce ne permettait d'obtenir une sauce enrichie en protéines qui soit satisfaisante pour les personnes âgées, notamment les personnes âgées dénutries, et qui puisse être aisément fabriquée industriellement. Pour certaines farines, la saveur du roux obtenu n'est pas agréable (par exemple farine d'amarante, farine de chanvre, farine de lupin), ou trop marquée (par exemple farine de soja). Pour d'autres farines, la saveur du roux obtenu est acceptable, mais la texture du roux n'est pas homogène (par exemple farine de pois chiche, farine d'épeautre, farine de froment).

La demanderesse a par ailleurs observé qu'aucune des farines commercialisées ne permettait d'atteindre un enrichissement en protéines satisfaisant.

La demanderesse a de plus constaté que l'ajout de concentrats et isolats de protéines dans la sauce, pour un enrichissement à 15% en protéines, conduisait à une impasse : de trop grands volumes de protéines doivent être ajoutés dans un petit volume de sauce, impactant la viscosité de la sauce.

Allant à l'encontre d'une certaine tendance actuelle à la réduction, voire la suppression du gluten dans l'alimentation, notamment dans les CNO, la demanderesse a imaginé d'utiliser du gluten, en lieu et place d'une farine, comme source de protéines.

La demanderesse a constaté que l'allergie alimentaire au blé et l'intolérance au gluten de blé (maladie coeliaque) sont rares, et concerneraient 1% de la population adulte. La maladie coeliaque se développe chez des sujets génétiquement prédisposés, et sa prévalence serait de 1.26% en Europe. La demanderesse a constaté que le diagnostic de la maladie coeliaque est le plus souvent effectué avant 60 ans.

A la connaissance de la demanderesse, il n'existe aucune contre-indication médicale à l'utilisation du gluten dans des produits à destination des personnes dénutries. Les personnes atteintes d'allergie alimentaire au blé et de maladie coeliaque représentant uniquement 1% des contre-indications de régime alimentaire en milieu hospitalier.

La demanderesse a constaté que l'utilisation d'une poudre contenant 100% de gluten ne donne pas de résultats satisfaisant en termes de traitement thermique (stérilisation/pasteurisation).

La demanderesse a constaté que l'utilisation d'un mélange poudre de gluten/farine de blé permettait d'obtenir des résultats acceptables lors des traitements thermiques de stérilisation/pasteurisation, mais que l'enrichissement en protéine restait limité à des valeurs de l'ordre de 13%.

La demanderesse a alors découvert qu'en incorporant du gluten et des protéines, préalablement réhydratées, dans la fraction liquide de la recette d'une sauce, ou en incorporant de préférence du gluten et des protéines à la fin du procédé de fabrication de la sauce, il était possible d'obtenir une solution culinaire hyperprotéique, se présentant sous la forme d'une sauce comprenant des protéines laitières et des protéines de gluten, la concentration en protéines étant supérieure à 15% en masse, soit au moins 10g de protéines pour 65g de sauce.

Un exemple de composition de la solution culinaire est présenté ci-dessous (exemple 1).

### Exemple 1

| Ingrédient | Quantité pour 35kg de sauce | Protéines pour 35kg de sauce | Protéines pour 100g d'ingrédient |
|---|---|---|---|
| Beurre | 1798 | 12.6 | 0.7 |
| Huile | 538 | 0 | 0 |
| Oignons | 3236 | 43.4 | 1.3 |
| Champignons | 2571 | 59.1 | 2.3 |
| Ail | 307 | 15.4 | 5.0 |
| Bouillon | 431 | 121.7 | 28.2 |
| Eau | 2517 | 0 | 0 |
| Vin blanc | 918 | 0 | 0 |
| Crème | 3955 | 87.0 | 2.2 |
| Lait | 11607 | 371.4 | 3.2 |
| Cèpes séchés | 2098 | 124,7 | 6,0 |
| Œuf | 877 | 131.5 | 15.0 |
| Poivre | 15 | 2.0 | 13.3 |
| Sel | 128 | 0 | 0 |

Avantageusement, dans la masse de 30.996 kg de sauce obtenue, une masse de 4.004kg du mélange de protéines de blé et de protéines laitières est ajoutée, portant le poids total de sauce à 35 kg, avec un taux de protéines de 15.6% en masse.

Dans une mise en oeuvre, un isolat de protéines de lait est ajouté, par exemple une caséine micellaire contenant entre 80% et 95% de protéines sur matière sèche.

La sauce obtenue contient des champignons et oignons rissolés, déglacés au vin blanc, avec une note de cèpe et une texture crémeuse. La sauce peut accompagner des viandes blanches, des poissons ou des féculents.

Les champignons comprennent par exemple des shi take (Lentinula edodes), des cèpes, des chanterelles (Craterellus tubaeformis, Cantharellus cibarius), des morilles (Morchella esculenta).

Par cèpe on désigne ici notamment le cèpe de Bordeaux (Boletus edulis), le bolet orangé (Leccinum quercinum), le bolet à pied rouge (Boletus erythropus).

La sauce ne contient avantageusement aucun additif ni conservateur ajouté.

La sauce ne subit aucun traitement ionisant et ne contient avantageusement aucun ingrédient ionisé.

Les valeurs nutritionnelles de la sauce sont les suivantes

| | |
|---|---|
| Valeurs nutritionnelles | Pour 100 g |
| Energie (kcal) | 170 |
| Protéines (g) | 15.5 |
| Matières grasses (g) | 9.4 |
| Dont AGS (g) | 5.4 |
| Glucides (g) | 5.7 |
| Dont sucres (g) | <2.5 |
| Sel (g) | 0.6 |

Un procédé de fabrication de la solution culinaire est présenté ci-dessous (exemple 2).

### Exemple 2- Fabrication de la solution culinaire

| Etapes | Opérations unitaires | Ingrédients | Durée | Agitation | Température |
|---|---|---|---|---|---|
| 1 | Pesées | Toutes les matières premières. | / | / | / |
| 2 | Chauffage & mélange | Beurre, huile, oignons, ail et champignons. | 15-20 min | Faible | 60°C-80°C |
| 3 | Chauffage & mélange | Vin blanc, bouillon, eau, crème et lait. | 15-20 min | Faible | 60°C-80°C |
| 4 | Cuisson & broyage | / | 15-20 min | Elevée | >80°C |
| 5 | Refroidissement & broyage | / | 5-10 min | Elevée | <60°C |
| 6 | Mélange | Cèpes déshydratés, œuf, sel, poivre. | 1-5 min | Elevée | <60°C |
| 7 | Enrichissement en protéines | Mélange de protéines de gluten et de protéines laitières. | 5-10 min | Elevée | <60°C |
| 8 | Refroidissement | / | tsp T°C=-18°C | Faible | -18°C |
| 9 | Conditionnement | / | / | / | -18°C |
| 10 | Stockage | Produits finis conditionnés. | / | / | -18°C |

Le tableau ci-dessus présente les étapes de fabrication d'une solution culinaire, selon une mise en oeuvre.

Le matériel employé pour une telle fabrication comprend des contenants (notamment pour l'étape 1), une maryse (spatule), un entonnoir ou une trémie (étapes 2, 3, 6 et 7), des brocs avec bec verseur et des emballages de type doypacks (sachet souple tenant debout), thermoscellables (étape 9).

Selon diverses réalisations, les actions suivantes peuvent être suivies, le cas échéant en combinaison.

Durant la première étape de pesées, le bouillon peut être agité dans l'eau.

A l'issue de l'étape 2, le beurre est entièrement fondu, l'ail et les champignons sont cuits.

A l'issue de l'étape 3, la sauce est liquide, blanche et très claire.

A l'issue de l'étape 4, la sauce a pris une teinte marron très clair, sa texture est homogène et lisse, sans particules.

Lors de l'étape 6, les cèpes déshydratés sont pré-incorporés dans la sauce, par exemple à l'aide d'une maryse.

A l'issue de l'étape 6 la sauce s'est épaissie un peu en gardant une texture parfaitement homogène et lisse. Des particules marron foncé de cèpes déshydratés sont visibles. La sauce doit prendre une teinte marron plus foncé grâce aux cèpes déshydratés.

A l'issue de l'étape 7, la sauce obtenue est légèrement épaissie, avec une texture nappante, parfaitement homogène et lisse, sans particule, de couleur marron clair, et est très brillante.

Lors de l'étape 8, la sauce obtenue ne s'épaissit que très peu au refroidissement, et garde un bon niveau d'écoulement pour être facile à doser.

Lors de l'étape 7, la sauce est avantageusement tamisée, pour éviter la présence de corps étrangers.

Lors de l'étape 9, le conditionnement est avantageusement effectué dans une salle préalablement désinfectée et maintenue à 10°C.

Dans certaines mises en oeuvre, la sauce est conditionnée en poches surgelées, à conserver à -18°C.

Le poids net de la poche surgelée est par exemple de 1kg, et les poches sont livrées en carton de 8 kg.

La sauce est avantageusement consommée dans les 72h après décongélation, en étant maintenue au réfrigérateur à une température maximum de +4°C.

Lors de l'utilisation de la sauce, une remise en température est effectuée au préalable, sans décongélation, par passage au bain-marie à 82°C durant 25 minutes, jusqu'à atteindre une température de 63°C à coeur du produit.

La sauce est à consommer chaude, de préférence dans les deux heures qui suivent sa préparation.

Exemples d'utilisation de la solution culinaire en tant qu'aide culinaire

Une solution culinaire selon l'invention peut être utilisée comme sauce ou comme aide culinaire, c'est-à-dire incorporée en tant qu'ingrédient dans différents plats, par exemple soupe/potage, purée, légumes, plat préparé, mixé (viande, féculent, légume).

Selon un premier exemple, la sauce est incorporée dans un potage, une soupe, avec pour 10 personnes les proportions suivantes :
1,5 kg de potage/soupe (70%)
650 g de sauce (30%)

Un potage standard est préparé, puis la sauce réchauffée au préalable est incorporée au potage, et mélangée avant service.

Selon un deuxième exemple, la sauce est incorporée à une purée, avec pour 10 personnes les proportions suivantes :
600 g de purée (73%)
220 g de sauce (27%)
+ 440 g de sauce en nappage

Une purée classique est réalisée, puis la sauce réchauffée au préalable est incorporée, et mélangée avant service.

Selon un troisième exemple, la sauce est incorporée à un plat de légumes, avec pour 10 personnes les proportions suivantes :
600 g de légumes (73%) : carottes, poireaux, épinards
220 g de sauce (27%)
+ 440 g de sauce en nappage

Les légumes sont préparés de manière classique, puis la sauce réchauffée au préalable est incorporée, et mélangée avant service. Selon un quatrième exemple, la solution culinaire est incorporée à un plat préparé, tel que lasagnes ou gratin de féculents ou légumes, avec pour 10 personnes les proportions suivantes :
1,15 kg de préparation (72%) : lasagnes, gratin de féculents ou légumes
450 g de sauce (28%)
+ 220 g de sauce en nappage

Le plat préparé est réalisé de manière classique, puis la sauce réchauffée au préalable est incorporée, et mélangée si besoin. Avantageusement, le plat est ensuite repassé au four pour un effet gratiné avant service.

Selon un cinquième exemple, la solution culinaire est incorporée à un plat mixé, par exemple un mixé de viande, un mixé de légumes, un mixé de féculents. Avantageusement, deux composantes mixées de l'assiette sont enrichies en sauce, et un nappage de 22 g de sauce est effectué dans l'assiette.

Les proportions sont par exemple les suivantes, pour un mixé viande, pour 10 personnes :
420 g de viande
120 g d'oeuf
120 g de lait
113 g de sauce
4 g de sel

Après avoir pesé puis mixé l'ensemble des ingrédients ensemble, à chaud ou à froid, suivant le mode de fabrication des mixés, une cuisson est effectuée durant 40 minutes au four polyvalent 110°C 50% d'humidité. Les proportions sont par exemple les suivantes, pour un mixé de légumes, pour 10 personnes :
680 g de légumes
540 g de blancs d'oeuf
113 g de sauce
4 g de sel

Après avoir pesé puis mixé l'ensemble des ingrédients ensemble, à chaud ou à froid, suivant le mode de fabrication des mixés, une cuisson est effectuée pendant 40 minutes au four polyvalent 110°C 50% d'humidité. Les proportions sont par exemple les suivantes, pour un mixé de féculents, pour 10 personnes :
680 g de féculents
540 g de blancs d'oeuf
113 g de sauce
4 g de sel

Après avoir pesé puis mixé l'ensemble des ingrédients ensemble, à chaud ou à froid, suivant le mode de fabrication des mixés, une cuisson est effectuée durant 40 minutes au four polyvalent 110°C 50% d'humidité. La solution culinaire selon l'invention présente de nombreux avantages. La solution culinaire est hyperprotéique et hypercalorique, concentrée. Une portion de 65g de solution culinaire contient 10g de protéines, avec un profil en acides aminés complet et équilibré ainsi qu'une bonne digestibilité. La solution culinaire peut ainsi être apportée en petite portion dans l'assiette, est hypercalorique et hyperprotéique, et adaptée aux personnes dénutries, en particulier les personnes âgées dénutries. La solution culinaire a tous les attributs organoleptiques attendus d'une sauce, et permet d'agrémenter une grande variété de plats, avec une texture nappante et une viscosité standardisée selon les grades IDDSI, compatibles aux capacités des personnes dénutries, en particulier vis-à-vis des troubles de la déglutition.

La solution culinaire est prête à l'emploi et s'intègre directement aux organisations existantes. La solution culinaire peut être livrée en portions individuelles correspondant à une louche à sauce standard de taille 6.5 (soit 65g).

Une étude de consommation des solutions culinaires de la présente invention, réalisée sur un panel de 60 personnes âgées dénutries réparties dans trois établissements de type EHPAD, a montré une consommation globale de plus de 80 % de la sauce, mesurée sur 370 repas, quel que soit le type de plats chauds servis (plus de 95% chez les mangeurs normaux et plus de 70% chez les petits mangeurs tels que définis précédemment). Ces résultats ont été obtenus par pesées de chacune des composantes du repas, y compris la sauce, avant et après la prise alimentaire, afin d'évaluer la consommation.

## Revendications

1. Solution culinaire hyperprotéique, **caractérisée en ce qu'**elle se présente sous la forme d'une sauce comprenant des protéines laitières et des protéines de gluten, la concentration en protéines étant supérieure à 15% en masse, soit au moins 9.75g de protéines pour 65g de sauce.

2. Solution culinaire selon la revendication 1, **caractérisée en ce que** les protéines de gluten sont des protéines de gluten de blé.

3. Solution culinaire selon l'une quelconque des revendications 1 ou 2, **caractérisée en ce qu'**elle comprend entre 4% et 10% en poids de protéines de gluten.

4. Solution culinaire selon l'une quelconque des revendications précédentes, **caractérisée en ce qu'**elle comprend un concentrat de protéines de lait.

5. Solution culinaire selon l'une quelconque des revendications précédentes, **caractérisée en ce qu'**elle comprend au moins un ingrédient choisi parmi le groupe comprenant le beurre, la crème, le lait, le fromage, l'huile, l'œuf, le pois chiche.

6. Solution culinaire selon l'une quelconque des revendications précédentes, **caractérisé en ce qu'**elle comprend au moins un ingrédient choisi parmi le groupe comprenant l'oignon, l'ail, l'échalote, le sel, le poivre, le vin, les champignons.

7. Procédé de fabrication d'une solution culinaire telle que présentée dans l'une quelconque des revendications précédentes, le procédé étant **caractérisé en ce qu'**il comprend une étape de mélange et cuisson des ingrédients de la sauce, suivie d'une étape de cuisson et broyage, à l'issue de laquelle le mélange obtenu subit une étape de refroidissement, le mélange de protéines étant ajouté après cette étape de refroidissement.

8. Procédé de fabrication selon la revendication 7, **caractérisé en ce que** l'étape de refroidissement amène le mélange à une température comprise entre 40°C et 60°C.

9. Procédé de fabrication selon la revendication 7 ou 8, **caractérisé en ce qu'**il comprend, après l'étape d'ajout du mélange de protéines, une étape de chauffe du mélange obtenu, à une température comprise entre 60°C et 80°C.

10. Utilisation d'une solution culinaire telle que présentée dans l'une quelconque des revendications 1 à 6, comme sauce accompagnant un plat préparé, ou comme aide culinaire intégrée en tant qu'ingrédient à un plat préparé.
